# EUROPEAN PATENT APPLICATION

(11) **EP 0 854 381 A1**
(43) Date of publication of application: **22.07.1998**
(21) Application number: 98100705.7
(22) Date of filing: 16.01.1998
(51) Int. Cl.: G03B 19/12

(54) **Camera having a through-the-lens finder**

(30) Priority: 16.01.1997 JP 5752/97
(71) Applicant: MINOLTA CO., LTD., Chuo-Ku, Osaka-Shi, Osaka, 541 (JP)
(72) Inventor: Tanii, Junichi, c/o MINOLTA CO., LTD., Chuo-ku, Osaka-shi, Osaka 541 (JP)
(74) Representative: Füchsle, Klaus, Dipl.-Ing.

(57) **Abstract**

A camera having a through-the-lens finder, it is constructed such that the main mirror can be positioned into three different positions: a observing position, a photographing position in which the main mirror is moved away from the photographic optical system, and a collapsing position. In the collapsing position, the main mirror comes closer to the film in the camera body in the collapsing position than in the case of the observing position, so that a lens-barrel can be collapsed inside the camera body even if the lens-barrel has a considerably large diameter. Besides, the main mirror is moved from the observing position into the collapsing position unitedly with the lens-barrel collapsing, so that a driving mechanism for moving away the main mirror is not required.

## Description

### BACKGROUND OF THE INVENTION

This invention relates to a single-collapsible-lens reflex camera having a through-the-lens (TTL) finder, wherein photographing lenses can be moved forward from and backward into the camera body.

In the above-mentioned camera which is conventionally known, a main mirror which is included in a finder optical system, is moved away from the photographic optical path into a position (refer to a photographing position) in which the main mirror comes close to a focusing screen in a photographing operation. Moreover, there is known a camera in which a lens-barrel for supporting photographing lenses and lens groups can be collapsed inside the camera body when the main mirror is in the photographing position, and besides, the main mirror can be collapsed further in the photographing position (e.g. refer to United States Patent No. 5432574).

However, in the conventional structure shown in the above-mentioned U.S.P., the main mirror can be moved away only in the position that the main mirror comes close to the focusing screen so that diameter size of a lens-barrel for supporting collapsible lens and lens groups is restricted. Therefore, the lens-barrel which is larger than the lenses, can not be collapsed, which decreases the effect of collapsing. Besides, in the above-described conventional structure, a shutter is easy to travel accidentally, because of which, the shutter is wrongly charged by a mirror-up. This kind of unintentional shutter traveling should be avoided.

### SUMMARY OF THE INVENTION

This invention is made to solve the above-mentioned problems. The object of the present invention is to provide a single-lens reflex camera having a TTL finder, wherein the main mirror is moved away into a position other than the photographing position in order that the lens-barrel having a considerably large diameter can be collapsed close to a position where the main mirror is contained, the shutter does not accidentally travel, and besides, the main mirror is moved away unitedly with the lenses collapsing so that a driving mechanism for moving away the main mirror can be omitted.

According to a feature aspect of the present invention, a camera comprises a camera body, photographing lenses, a finder optical system and a mirror. In the above-mentioned construction, said photographing lenses are supported by said body, and movable between a photographing position and a collapsing position, said finder optical system is arranged in said camera body, and said mirror is movable between a first position in which said mirror guides light passing through said photographing lenses to said finder optical system, a second position in which said mirror is moved away from an optical path of the light passing through said photographing lenses, and a third position in which said mirror is moved away from the collapsing position of said photographing lenses.

### BRIEF DESCRIPTION OF THE DRAWINGS

FIG. 1 is a schematic sectional view of a camera in accordance with the first embodiment of the present invention, showing a state in which a main mirror is in an observing position;
FIG. 2 is a perspective view of the main mirror mechanism in a state shown in FIG. 1;
FIG. 3 is a schematic sectional view of the camera of the first embodiment, showing a state in which the main mirror is in a photographing position;
FIG. 4 is a schematic sectional view of the camera in accordance with the first embodiment, showing a state in which the main mirror is in a collapsing position; and,
FIG. 5 is a schematic sectional view of the camera in accordance with the second embodiment of the present invention, showing a state in which the main mirror is in the observing position.

### DETAILED DESCRIPTION OF THE PREFERRED EMBODIMENT OF THE PRESENT INVENTION

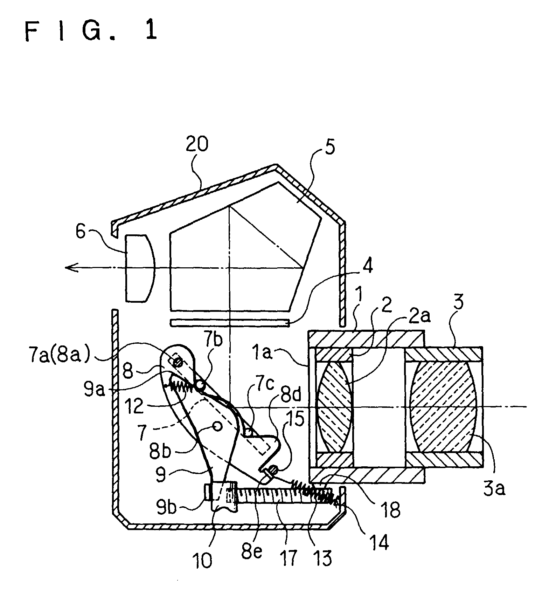

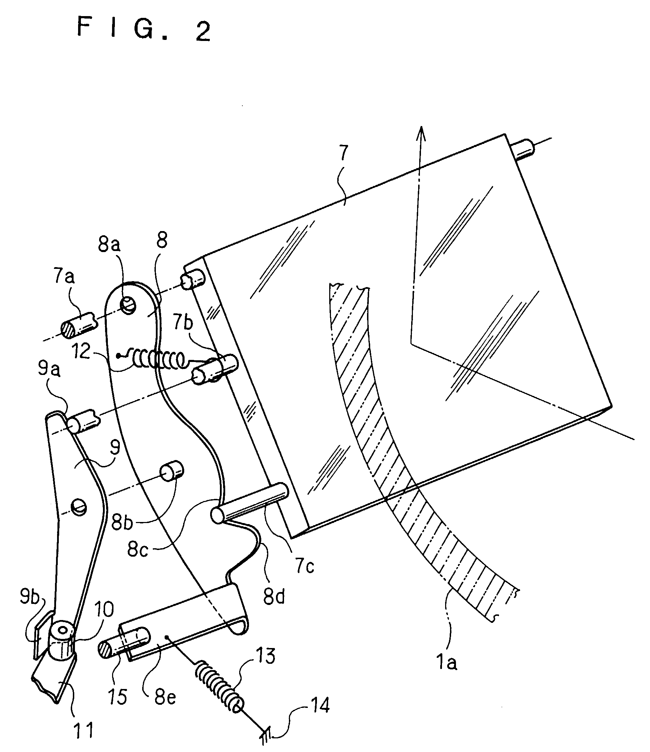

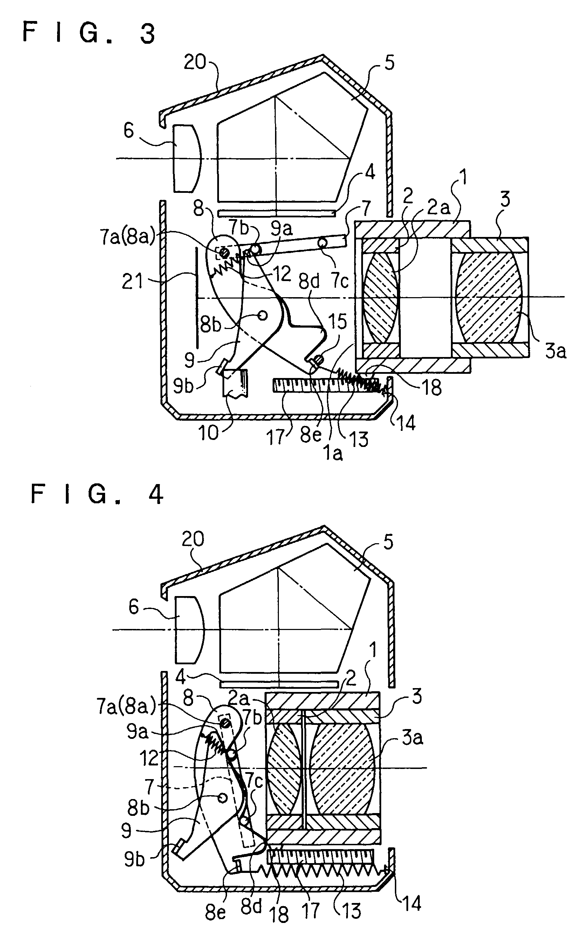

Now, the first embodiment of the present invention will be described in further detail by way of example with reference to the accompanying drawings. FIG. 1 shows the first embodiment of the present invention in which a main mirror of a camera is in an observing position (first position), and FIG. 2 is a view of the main mirror mechanism in a state shown in FIG. 1. FIG. 3 is a view showing a state in which the main mirror is moved away from an photographic optical system into a photographing position (second position) for a photographing operation. FIG. 4 is a view showing a state in which the main mirror is in a collapsing position (third position) and photographing lenses are collapsed. A camera of the present invention is provided with a photographing lens unit including a lens-barrel 1 which can be collapsed into the camera body. The lens-barrel 1 consists of a back-group lens-barrel 2 and a front-group lens-barrel 3. The back-group lens-barrel 2 supports a back-group lens 2a, and can move forward from and backward into the lens-barrel 1. The front-group lens-barrel 3 supports a front-group lens 3a, and can move forward from and backward into the lens-barrel 1. Further, a finder optical system is composed of a focusing screen 4, a pentagonal prism 5, an eye piece 6 and a main mirror 7. The main mirror 7 is rotatably supported on the camera body by supporting axes 7a which are arranged at the upper right and left end side of the main mirror 7. The main mirror 7 can be moved into three different positions: an observing position, a photographing position and a collapsing position.

Next, structure of the main mirror mechanism will be explained in detail as follows. One of the supporting axes 7a which are arranged on both sides of the main mirror 7, also supports a mirror-supporting lever 8 through a bearing 8a. Further, the mirror-supporting lever 8 is provided with a supporting axis 8b which rotatably supports a mirror-up lever 9 for moving up the main mirror 7. The main mirror 7 can be rotated in the counterclockwise direction by an upper end part 9a of the mirror-up lever 9 engaging with an axis 7b of the main mirror 7. Besides, the mirror-up lever 9 is rotated in a photographing operation by a driving roller 10 arranged at a driving lever 11 which is held by the camera body. The driving lever 11 is driven by a driving mechanism which is not shown, which makes the driving roller 10 engage with a projection 9b formed in a lower end part of the mirror-up lever 9. Moreover, the main mirror 7 is rotated and moved down into the clockwise direction by a down-spring 12 which is loaded between the mirror-supporting lever 8 and the axis 7b of the main mirror 7. The main mirror 7 also has a pin 7c on its lower end side which engages with a notched part 8c of the mirror-supporting lever 8 when the main mirror 7 is in the observing position. Further, the mirror-supporting lever 8 is rotated in the counterclockwise direction by a holding spring 13 which is loaded between the mirror-supporting lever 8 and a fixed part 14 of the camera body. The mirror-supporting lever 8 is prevented from rotating further in the counterclockwise direction by a fixed pin 15 of the camera body contacting with a projection 8e of the mirror-supporting lever 8.

The lens-barrel 1 has a back end surface 1a (shown in a two-dot chain line in FIG. 2) which can contact with a projection 8d of the mirror-supporting lever 8, and the back end surface 1a rotates the mirror-up lever 8 and moves it backward when the lens-barrel 1 is collapsed. The lens-barrel 1 is moved forward and backward by a long gear 17 which is arranged in the camera body and driven to rotate by an unshown driving source, and the long gear 17 engages with a gear 18 which is arranged on the circumference of the lens-barrel 1. The camera has a camera body which is surrounded by a cover 20. Each of the back-group lens-barrel 2 and the front-group lens-barrel 3 can be collapsed into and from the lens-barrel 1 by means of cam coupling, etc.. In the camera body, a film 21 is guided by an unshown film guide, and faces to a photographic optical axis behind the main mirror 7 in the observing position.

Now, an operation of the main mirror mechanism will be explained in detail as follows. When the main mirror 7 is in the observing position as shown in FIG. 1, the mirror-supporting lever 8 which is rotatably supported by the supporting axes 7a, is rotated and urged in the counterclockwise direction by the holding spring 13, and the projection 8e of the mirror-supporting lever 8 contacts with the fixed pin 15. The main mirror 7 which is rotatably supported onto the camera body by the supporting axes 7a, is rotated and urged in the clockwise direction by the down-spring 12 in a state in which the pin 7c engages with the notched part 8c of the mirror-supporting lever 8. At the same time, as for the photographing lenses, the lens-barrel 1 has been moved forward into the observing position, and the front-group lens 3a and the back-group lens 2a have been moved forward and held in a predetermined optical position, so that an object image is projected onto the focusing screen 4 through the main mirror 7. In this state, a photographer is able to observe the object image which is projected on the focusing screen 4, through the pentagonal prism 5 and the eye piece 6. The pentagonal prism 5 and the eye piece 6 are included in a generally-known finder optical system for observing the object image projected on the focusing screen 4.

Secondly, an operation for moving away the main mirror 7 from the photographing optical system into the photographing position (shown in FIG. 3) will be explained. The driving roller 10 is moved from a standby position shown in FIG. 1 to a driving position (toward the left in FIG. 1, backward direction), and pushes the projection 9b of the mirror-up lever 9. Thereby, the mirror-up lever 9 rotates centering the pin 8b in the clockwise direction, and makes the upper end part 9a push up the axis 7b of the main mirror 7. The main mirror 7 rotates around the supporting axis 7a in the counterclockwise direction (a direction in which the lower end side of the main mirror 7 comes close to the focusing screen 4) against the force of the down-spring 12, therefore, the main mirror 7 is moved away from the photographic optical path, which enables to photograph.

Next, an operation for moving the main mirror 7 into the collapsing position (FIG. 4) will be explained as follows. At first, the lens-barrel 1 is moved backward (toward the left in FIG. 1) from the observing position shown in FIG. 1, so that the back end surface 1a of the lens-barrel 1 pushes the projection 8d of the mirror-supporting lever 8, and the mirror-supporting lever 8 is rotated in the clockwise direction (direction in which the lower end side of the main mirror 7 comes close to the film 21) against the force of the holding spring 13. In this state, since the main mirror 7 is moved unitedly with the mirror-supporting lever 8 by the force of the down-spring 12, the end of the main mirror 7 moves toward the film 21 without touching on the back end surface 1a of the lens-barrel 1. At the same time, the front-group lens-barrel 3 (front-group lens 3a) and the back-group lens-barrel 2 (back-group lens 2a) also move in the collapsing direction inside the lens-barrel 1. Then, the collapsing movement into the camera body is completed.

In the collapsing position shown in FIG. 4, the main mirror 7 is positioned close to the film 21 by comparison to the case of the observing position shown in FIG. 1. The main mirror 7 is moved from the observing position into the collapsing position unitedly with the photographing lenses collapsing.

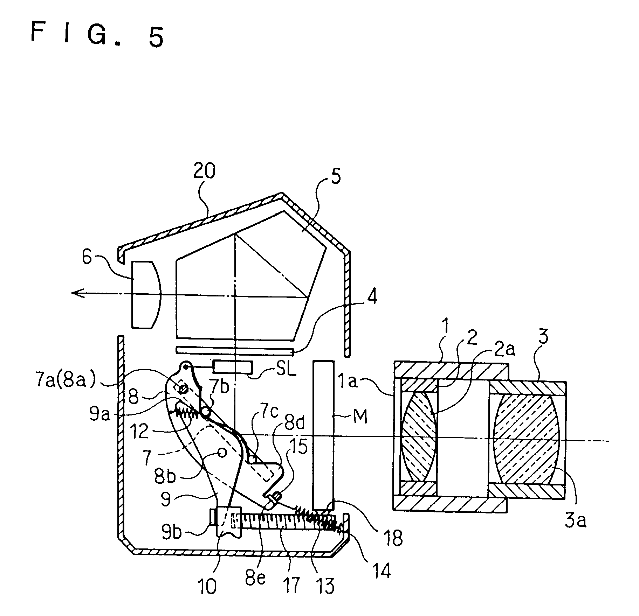

Then, the explanation is nextly given to the second embodiment of the present invention with reference to FIG. 5. FIG. 5 is a schematic sectional view showing the camera according to the second embodiment. The camera is constructed such that a solenoid SL drives a main mirror 7 therein. The main parts of the camera body are just the same as one of the camera shown in FIG. 1. A driving shaft of the solenoid SL for driving the mirror-supporting lever 8 is connected with the upper end of the mirror-supporting lever 8. The main mirror 7 is driven by the solenoid SL. The lens-barrel 1 is removable from a mount M which is arranged in the camera body, so that the photographing lenses can be changed.

The present invention is not restricted to the above-described embodiments, but includes varied or modified embodiments from the above. For example, although the structure in which the main mirror 7 is directly collapsed by the back end surface 1a of the lens-barrel 1, is disclosed in the foregoing embodiment, it may be possible to separately arrange a driving source such as a motor which directly moves the mirror-supporting lever 8 in the clockwise direction before or simultaneously with the photographing lenses collapsing, or it may also be possible to share a releasing motor mechanism as the above-mentioned driving source.

## Claims

1. A camera comprising:
a camera body;
photographing lenses which are supported by said body, and movable between a photographing position and a collapsing position;
a finder optical system which is arranged in said camera body; and,
a mirror which is movable between a first position in which said mirror guides light passing through said photographing lenses to said finder optical system, a second position in which said mirror is moved away from an optical path of the light, and a third position in which said mirror is moved away from the collapsing position of photographing lenses.

2. A camera as claimed in claim 1, wherein said camera body has a film guide which supports a film behind said photographing lenses vertically to an optical axis of said photographing lenses, and said mirror is positioned closer to said film guide in the third position than in the first position.

3. A camera as claimed in claim 2, wherein said mirror is positioned almost parallel to the film supported by said film guide in the third position.

4. A camera as claimed in claim 3, wherein said finder optical system has a focusing screen which is arranged almost parallel to the optical axis of said photographing lenses, and said mirror is positioned almost parallel to the focusing screen in the second position.

5. A camera as claimed in claim 1, wherein said mirror is rotatably supported on one end thereof, and another end comes close to said finder optical system when said mirror moves from the first position to the second position, and comes close to a film surface when said mirror moves from the first position to the third position.

6. A camera as claimed in claim 1, wherein said mirror is positioned at an angle of approximately 45 degrees to the optical axis of said photographing lenses in the first position, positioned almost parallel to the optical axis of said photographing lenses in the second position, and positioned at an angle of approximately 90 degrees to the optical axis of said photographing lenses in the third position.

7. A camera as claimed in claim 1, further comprising a linkage which moves said mirror from the first position to the third position unitedly with photographing lenses moving from the photographing position to the collapsing position.

8. A camera as claimed in claim 7, wherein said linkage is driven by said photographing lens.

9. A camera as claimed in claim 7, further comprising a driving source which drives said linkage.
